Europäisches Patentamt

European Patent Office

Office européen des brevets

(11) Veröffentlichungsnummer: **0 352 874**

**A2**

(12) # EUROPÄISCHE PATENTANMELDUNG

(21) Anmeldenummer: 89250008.3

(22) Anmeldetag: 26.07.89

(51) Int. Cl.4: **B60C 27/12**

(30) Priorität: 26.07.88 DE 3825747

(43) Veröffentlichungstag der Anmeldung:
31.01.90 Patentblatt 90/05

(84) Benannte Vertragsstaaten:
AT CH DE FR GB IT LI SE

(71) Anmelder: **RUD-Kettenfabrik Rieger & Dietz GmbH u. Co.**
**Friedensinsel**
**D-7080 Aalen 1(DE)**

(72) Erfinder: **Rieger, Hansjörg, Dr.-Ing.**
**Saarstrasse 48**
**D-7080 Aalen(DE)**
Erfinder: **Müller, Anton, Dipl.-Ing.(FH)**
**Brandweg 9**
**D-7080 Aalen-Unterkochen(DE)**

(74) Vertreter: **Böning, Manfred, Dr. Ing. et al**
**Patentanwälte Dipl.-Ing. Dieter Jander Dr.**
**Ing. Manfred Böning Kurfürstendamm 66**
**D-1000 Berlin 15(DE)**

(54) **Gleitschutzvorrichtung für Fahrzeugräder.**

(57) Bei einer Gleitschutzvorrichtung für Fahrzeugräder, die mit einem das Fahrzeugrad (2) umschließenden Gleitschutzgürtel versehen ist, dienen zur Befestigung der Gleitschutzvorrichtung am Fahrzeugrad
(2) elastische Spannorgane (14), die in Löcher (20)
der Felge des Fahrzeugrades (2) einhängbar sind.
Um die Spannungen (14) nach der Verbindung mit
dem Fahrzeugrad (2) spannen zu können, ist mindestens ein Spannmechanismus für die Spannorgane
(14) vorgesehen.

Fig. 2

## Gleitschutzvorrichtung für Fahrzeugräder

Die Erfindung betrifft eine Gleitschutzvorrichtung für ein Fahrzeugrad mit einem durch elastische Spannorgane mit dem Fahrzeugrad verbindbaren Lager für die drehbare Lagerung einer Halterung für einen im montierten Zustand auf der Lauffläche des Fahrzeugrades zu liegen kommenden Gleitschutzgürtel.

Aus dem DE-GM 87 09 545 ist eine Gleitschutzvorrichtung der vorstehenden Art bekannt, bei der die elastischen Spannorgane von Gummisträngen gebildet werden, die an ihren Enden Haken aufweisen, welche in die Löcher der Felge eines Fahrzeugrades einhängbar sind. Um eine Anpassung an unterschiedliche Felgenarten zu ermöglichen, sind dabei die Gummistränge an ihren Enden mit mehreren hintereinander angeordneten Schlitzen versehen, von denen jeweils einer zur Verankerung eines aus Stahlblech gebogenen Hakens dient. Beim Befestigen der bekannten Gleitschutzvorrichtung am Fahrzeugrad müssen vergleichsweise hohe Kräfte aufgebracht werden. Der Grund hierfür besteht darin, daß die Halterung nicht nur die Aufgabe hat, den Gleitschutzgürtel auf der Lauffläche des Fahrzeugreifens zu halten, sondern daß durch sie darüber hinaus ein während der Montage zunächst außerhalb des Laufflächenbereiches verbleibender Gleitschutzgürtelabschnitt durch die Halterung bei Einleitung einer Drehbewegung in das Fahrzeugrad auf die Lauffläche gedrückt werden muß.

Der Erfindung liegt die Aufgabe zugrunde, eine Gleitschutzvorrichtung der in Betracht gezogenen Art dahingehend zu verbessern, daß das Befestigen ihrer Halterung am Fahrzeugrad spürbar erleichtert wird. Diese Aufgabe wird erfindungsgemäß dadurch gelöst, daß die elastischen Spannorgane mit mindestens einem Spannmechanismus versehen sind, durch den sie sich nach ihrer Verbindung mit dem Fahrzeugrad spannen lassen.

Die erfindungsgemäße Gleitschutzvorrichtung bietet den Vorteil, daß sich ihre Spannorgane zunächst ohne jeglichen oder zumindest nennenswerten Kraftaufwand mit dem Fahrzeugrad verbinden lassen und daß nach vollzogener Befestigung des Lagers für die Halterung am Fahrzeugrad mindestens ein geeignete Spannmittel aufweisender Spannmechanismus betätigt werden kann, wobei sich die Verwendung mindestens eines Spannexzenters als besonders vorteilhaft erwiesen hat.

Die Erfindung wird im folgenden anhand der beigefügten Zeichnung näher erläutert. Es zeigen:

Fig. 1 die perspektivische Ansicht einer fertig montierten Gleitschutzvorrichtung,

Fig. 2 einen Schnitt durch ein Lager für die Spannvorrichtung der Gleitschutzvorrichtung gemäß Fig. 1,

Fig. 3 einen senkrecht zum in Fig. 2 dargestellten weiteren Schnitt durch das Lager der Spannvorrichtung gemäß Fig. 1,

Fig. 4 einen Spannmechanismus zum Spannen eines einzelnen Spannstranges und

Fig. 5 einen modifizierten Spannmechanismus für das Spannen eines Spannstranges.

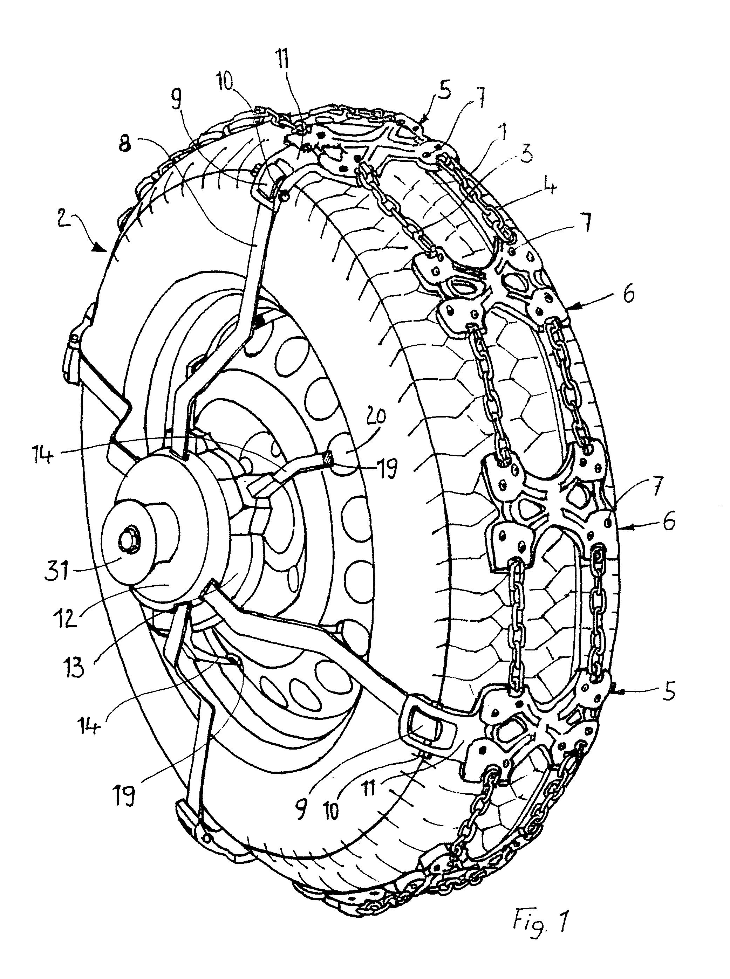

In Fig. 1 ist 1 die Lauffläche eines Fahrzeugrades 2, auf das eine Gleitschutzvorrichtung aufgezogen ist, die einen die Lauffläche 1 umgebenden, geschlossenen Gleitschutzgürtel bildet. Der Gleitschutzgürtel der Gleitschutzvorrichtung besteht aus paarweise nebeneinander angeordneten Kettenstrangabschnitten 3 und 4, welche zur Erzielung guter Spurführungseigenschaften im Bereich der Schultern des auf das Fahrzeugrad 2 aufgezogenen Reifens parallel zueinander verlaufen. Zwischen den Kettenstrangabschnitten 3 bzw. 4 sind Greifelementträger 5 und 6 angeordnet, die von stollenartigen Vorsprüngen gebildete Greifelemente aufweisen und im Bereich dieser Greifelemente mit Spikes 7 bestückt sind. Zur Halterung des Gleitschutzgürtels dienen Haltearme 8, die das Laufnetz federnd in den Bereich der Lauffläche 1 des Fahrzeugrades 2 drücken. Die äußeren Enden 9 der Haltearme sind unmittelbar, d.h. ohne zusätzliche Zwischenelemente, mittels Bolzen 10 mit den Auslegern 11 der Greifelementträger 5 verbunden, während ihre inneren Enden von einem Tragkörper 12 gehalten werden, der auf einem Lager 13 drehbar gelagert ist. Das Lager 13 ist über mehrere elastische Spannorgane 14 am Fahrzeugrad 2 befestigt. Die elastischen Spannorgane 14 üben auf die Haltearme 8 und die Greifelementträger 5 eine in Richtung der Radachse wirkende Axialkraft aus. Diese Axialkraft muß insbesondere während des Montagevorganges vergleichsweise groß sein, was nicht mehr und nicht weniger bedeutet, als daß die durch die elastischen Spannorgane aufzubringenden Spannkräfte verhältnismäßig hohe Werte erreichen.

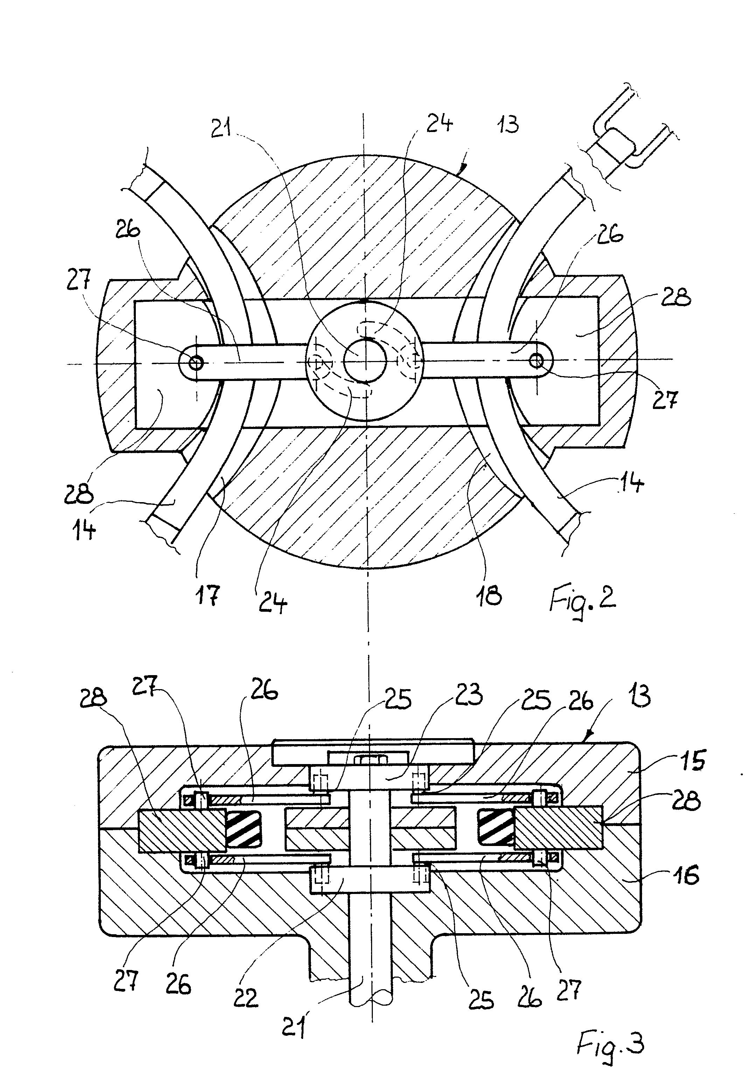

Um die Montage trotz der vergleichsweise hohen erforderlichen Spannkräfte bequem zu gestalten, ist den elastischen Spannorganen 14 ein Spannmechanismus zugeordnet, dessen Aufbau sich aus den Figuren 2 und 3 ergibt.

Das Lager 13 besteht aus zwei Gehäuseteilen 15 und 16, die Führungskanäle 17 und 18 für zwei Spannorgane 14 bilden. An den sich gegenüberliegenden Enden der Spannorgane ist jeweils ein Haken 19 angeordnet, der in ein Loch 20 der Felge des Fahrzeugrades 2 greift. Nach dem Einhängen der Haken 19 in die entsprechenden Löcher 20 werden die Spannorgane gegebenenfalls nach einer Vorverkürzung durch den Spannmechnismus gespannt. Der Spannvorgang wird durch einen zentralen Drehknopf 31 eingeleitet, der am Ende einer Welle 21 sitzt, die zwei Exzenter 22 und 23 trägt. In entsprechend geformte Schlitze 24 der Exzenter 22 und 23 ragen Stifte 25, die an den Enden von Lenkern 26 angeordnet sind. Die Lenker 26 ihrerseits sind über Zapfen 27 mit Spannklötze bildenden Schiebern 28 verbunden. Durch Einleitung einer Drehbewegung im Uhrzeigersinn in die Welle 21 werden die Stifte 25 zur Achse der Welle verlagert. Die Folge ist, daß sich die Schieber 28 einander nähern und dabei die Spannung in den Spannsträngen erhöhen. Der für die Betätigung des Spannmechanismus erforderliche Kraftaufwand ist gering. Der Drehknopf 31 kann in der jeweiligen Spannstellung durch einen nicht dargestellten entriegelbaren Rastmechanismus arretiert werden.

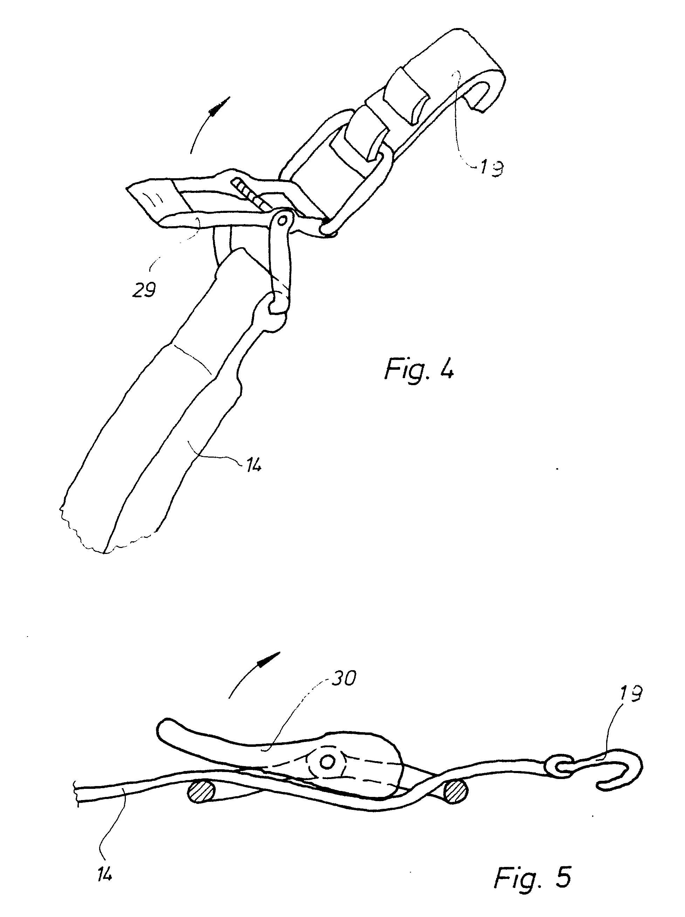

Um eine Anpassung der Spannorgane 14 an unterschiedliche Felgen zu erleichtern, können zusätzliche Spann- und Verkürzungsmechanismen verwendet werden. Derartige Spann-und Verkürzungsmechanismen sind in den Figuren 4 und 5 dargestellt. Auch bei ihnen läßt sich mittels jeweils eines Hebels 29 bzw. 30 eine zusätzliche Spannung in die Spannorgane 14 einleiten.

## Ansprüche

1. Gleitschutzvorrichtung für ein Fahrzeugrad (2) mit einem durch elastische Spannorgane (14) mit dem Fahrzeugrad (2) verbindbaren Lager (13) für die drehbare Lagerung einer Halterung für einen im montierten Zustand auf der Lauffläche des Fahrzeugrades (2) zu liegen kommenden Gleitschutzgürtel, dadurch gekennzeichnet, daß die elastischen Spannorgane (14) mit mindestens einem Spannmechanismus versehen sind, durch den sie sich nach ihrer Verbindung mit dem Fahrzeugrad (2) Spannen lassen.

2. Gleitschutzvorrichtung nach Anspruch 1, dadurch gekennzeichnet, daß Jedem Spannorgan (14) ein Spannmechanismus zugeordnet ist.

3. Gleitschutzvorrichtung nach Anspruch 1 oder 2, dadurch gekennzeichnet, daß sie mit einem Spannmechanismus zum gleichzeitigen Spannen mehrerer Spannorgane (14) versehen ist.

4. Gleitschutzvorrichtung nach einem der Ansprüche 1 bis 3, dadurch gekennzeichnet, daß die Spannmechanismen durch einem Spannexzenter (22,23) betätigbar sind.

5. Gleitschutzvorrichtung nach einem der Ansprüche 1 bis 4, dadurch gekennzeichnet, daß die Spannorgane (14) von Haltesträngen gebildet werden, die Führungskanäle (17,18) des Lagers (13) passieren und an ihren beiden Enden mit Befestigungshaken (19) versehen sind.

6. Gleitschutzvorrichtung nach Anspruch 5, dadurch gekennzeichnet, daß die Spannorgane (14) durch im Lager (13) geführte Schieber (28) in die Führungskanäle (17,18) ziehbar sind.

7. Gleitschutzvorrichtung nach einem der Ansprüche 1 bis 6, dadurch gekennzeichnet, daß zum Betätigen eines gemeinsamen Spannmechanismus für alle Spannorgane (14) ein von der Außenseite der Halterung zugänglicher Betätigungsknopf (31) dient.

Fig. 1

Fig. 2

Fig. 3

Fig. 4

Fig. 5